# EUROPÄISCHE PATENTSCHRIFT

(11) **EP 2 801 144 B1**
(45) Veröffentlichungstag und Bekanntmachung des Hinweises auf die Patenterteilung: **07.11.2018**
(21) Anmeldenummer: 13707350.8
(22) Anmeldetag: 27.02.2013
(51) Int. Cl.: H02M 1/10, H01F 29/02

(54) **SPANNUNGSUMWANDLUNGSVORRICHTUNG**
VOLTAGE CONVERTING DEVICE
DISPOSITIF DE CONVERSION DE TENSION

(30) Priorität: 29.02.2012 DE 102012203103
(43) Veröffentlichungstag der Anmeldung: 12.11.2014
(73) Patentinhaber: Siemens Mobility GmbH, 81739 München (DE)
(72) Erfinder: BECK, Reinhold, 91578 Leutershausen (DE); GLINKA, Martin, 91080 Uttenreuth (DE); PRÖLS, Markus, 90427 Nürnberg (DE)
(86) Internationale Anmeldenummer: PCT/EP2013/053904
(87) Internationale Veröffentlichungsnummer: WO 2013/127835

(56) Entgegenhaltungen:
- EP-A1- 0 923 181
- WO-A1-2006/079744
- WO-A2-2009/105734
- DD-A3- 251 057
- US-A1- 2009 237 195
- Haachitaba Loveday Mweene: "The Design Of front-End DC-DC Converters Of Distributed Power Supply Systems With Improved Efficiency And Stability", , 1. September 1992 (1992-09-01), Seiten 178-180, XP055063656, Gefunden im Internet: URL:http://dspace.mit.edu/bitstream/handle /1721.1/12860/27778821.pdf?sequence=1 [gefunden am 2013-05-22]

## Beschreibung

Die Erfindung geht aus von einer Spannungsumwandlungsvorrichtung mit zumindest einem Transformator, der ausgehend von einer Eingangsspannung zum Bereitstellen einer Ausgangsspannung vorgesehen ist, eine eingangsseitige Wicklungseinheit und eine ausgangsseitige Wicklungseinheit umfasst und gemäß zumindest zwei Betriebsmodi betreibbar ist, die jeweils einem unterschiedlichen Spannungsübersetzungsverhältnis zugeordnet sind, wobei zumindest eine der Wicklungseinheiten eine erste und wenigstens eine zweite Wicklung umfasst und den Betriebsmodi jeweils eine unterschiedliche Betriebskonfiguration der Wicklungen zugeordnet ist.

Das Spektrum von Anwendungen, die eine Spannungsübersetzung zwischen einer Eingangsspannung und einer verbraucherseitigen Spannung voraussetzen, weist eine erhebliche Breite auf. Darunter sind insbesondere Anwendungen zu finden, bei welchen ein bestehender Transformator für zumindest zwei Spannungsübersetzungsverhältnisse geeignet sein soll bzw. eine gewisse Flexibilität im Einsatz des Transformators gefordert wird.

Ein typisches Beispiel unter solchen Anwendungen stellt die elektrische Versorgung von elektrischen Verbrauchern dar, die von einer zur Verfügung stehenden Netzspannung gespeist werden, wobei ein bestimmter Verbraucher mit unterschiedlichen Werten der Netzspannung betreibbar sein muss oder ein bestehender Transformator zur Anwendung mit Verbrauchern unterschiedlicher Betriebsspannungen einsetzbar sein soll.

Mit den unterschiedlichen Spannungsübersetzungsverhältnissen sind ferner Anforderungen in Bezug auf die Erzeugung von Störströmen verbunden, die von Seite der Netzbetreiber gesetzt werden. Daraus resultieren unterschiedliche Erfordernisse an die Transformatorstreuung, die bei den unterschiedlichen Übersetzungsverhältnissen zu erfüllen sind. Die Transformatorkonstruktion muss, zusätzlich zur Bereitstellung unterschiedlicher Spannungsübersetzungsverhältnisse, diesen Anforderungen Rechnung tragen.

Im Bereich der Bahntechnik verfügen Haupttransformatoren elektrischer Schienenfahrzeuge, die für den Betrieb mit unterschiedlichen Bahnnetzspannungen (z.B. AC 25 kV/50 Hz; AC 15 kV/16,7 Hz) geeignet sind, typischerweise über eine Anzapfung der Ausgangsspannungswicklung zur Anpassung des Spannungsübersetzungsverhältnisses entsprechend der unterschiedlichen Bahnnetzspannungen an die Traktionsstromrichterspannung.

Aus den unterschiedlichen Störstromanforderungen sowie weiteren Anforderungen an die Leistungsübertragung über den Transformator - u.a. die Einhaltung der Bedingung cos(φ) = 1 zwischen Netzstrom und Netzspannung - der verschiedenen Bahnnetze resultieren unterschiedliche Anforderungen an die Transformatorstreuinduktivität. Je nach diesen Anforderungen kann das Verhältnis der Transformatorkurzschlussspannung zur Transformatornennspannung in einer typischen Spanne von 20% bis 50 % liegen.

Es ist zur Einstellung der Transformatorstreuinduktivität bereits bekannt, die ausgangsseitige Transformatorwicklung in zwei Wicklungen zu unterteilen, wobei der Transformator zwei unterschiedliche Betriebsmodi aufweist, die jeweils einer unterschiedlichen Betriebskonfiguration der Wicklungen zugeordnet sind. Abhängig vom Bahnnetz, in welchem das Schienenfahrzeug betrieben wird, wird ausgehend von einem Betriebsmodus mit nur einer aktiven Wicklung die zweite Wicklung zur anderen hinzugeschaltet, wobei in diesem zweiten Betriebsmodus die zusätzlich geschaltete Wicklung eine räumliche Erweiterung der ersten Wicklung darstellt. Beim Zuschalten der zusätzlichen Wicklung verändert sich die Streuinduktivität der Ausgangsspannungswicklung relativ zur Eingangsspannungswicklung.

Diese Lösung hat den Nachteil, dass die Streuinduktivität im zweiten Betriebsmodus von der Streuinduktivität der ersten Wicklung stark abhängig ist. Aus der begrenzten Einstellbarkeit des Verhältnisses zwischen den Streuinduktivitäten der unterschiedlichen Betriebsmodi resultiert häufig eine notwendige Überdimensionierung des Transformators bezüglich der Streuinduktivität in einem der Betriebsmodi. Ist der Transformator ausgangsseitig mit einem Traktionsstromrichter verbunden, führt eine unnötig große Transformatorstreuinduktivität insbesondere beim Vierquadrantensteller des Traktionsstromrichters zu erhöhten Spannungs- und Strombelastungen, welchen nur eine entsprechende Überdimensionierung des Traktionsstromrichters Rechnung tragen kann.

DD 251 057 A3 offenbart eine Wicklungsanordnung für Transformatoren. Dabei werden zwei Sekundärwicklungen mehrfach unterteilt und die Teilwicklungen abwechselnd in einer Lage zur Primärwicklung des Transformators angeordnet. Abhängig von der gewünschten Stromstärke in der Sekundärwicklung werden die Teilwicklungen in Reihe, parallel oder gemischt geschaltet Der Erfindung liegt die Aufgabe zugrunde, eine gattungsgemäße Spannungsumwandlungsvorrichtung bereit zu stellen, durch welche das Verhältnis der Transformatorstreuinduktivitäten zwischen den Betriebsmodi feiner eingestellt werden kann.
Hierzu wird vorgeschlagen, dass die erste Wicklung Wicklungsteile aufweist, die mit Wicklungsteilen der zweiten Wicklung eine alternierende Anordnung bilden. Hierdurch kann vorteilhaft eine weitestgehende Entkopplung der Streuinduktivitätswerte der Betriebsmodi erreicht werden, wobei eine erheblich erhöhte Flexibilität in der Wahl der Streuinduktivität in jedem Betriebsmodus erzielt werden kann. Diesem Vorteil liegt eine hohe Flexibilität in der Wahl der räumlichen Anordnung der Wicklungsteile der ersten und der zweiten Wicklung zugrunde. Unter einer "alternierenden Anordnung" der Wicklungsteile soll insbesondere eine Anordnung verstanden werden, bei welcher die Wicklungsteile der ersten und der zweiten Wicklung innerhalb der betreffenden Wicklungseinheit derart räumlich verteilt sind, dass sich Wicklungsteile der ersten Wicklung und Wicklungsteile der zweiten Wicklung abwechseln.
Ein Wicklungsteil weist zweckmäßigerweise zumindest eine Windung bzw. eine feste Anzahl von Windungen auf. Weist der Transformator eine zylindrische Wicklungsart auf ("Zylinderwicklung" oder "Röhrenwicklung"), entspricht ein Wicklungsteil vorzugsweise einer Wicklungslage. Hierbei wechseln sich die Wicklungslagen in einer Richtung ab, die vorzugsweise senkrecht zur Zylinderachse bzw. normal zu den Wicklungslagen ausgerichtet ist. Eine Ausbildung der Wicklungsteile als "gestürzte Wicklungen" ist ebenfalls denkbar.

Alternativ kann der Transformator derart gewickelt sein, dass er einen Satz von übereinander angeordneten, scheibenförmigen Wicklungsteilen aufweist ("Scheibenwicklung"). Hierbei wechseln sich die Wicklungsteile der ersten und zweiten Wicklung in einer Richtung ab, die vorzugsweise senkrecht zur Scheibenebene ausgerichtet ist.

In den oben genannten geometrischen Ausführungen und in weiteren, alternativen Ausführungen des Transformators bezieht sich die alternierende Anordnung der Wicklungsteile vorzugsweise auf eine Richtung, die für die Ermittlung der Transformatorstreuinduktivität charakteristisch ist. Insbesondere wird - in dieser charakteristischen Richtung betrachtet - der mittlere Abstand zwischen der eingangsseitigen Wicklungseinheit und der ausgangsseitigen Wicklungseinheit als Bezugsgröße für die Ermittlung der Transformatorstreuinduktivität herangezogen.

Bei der Ausbildung der alternierenden Anordnung kann die Anzahl der Wicklungsteile der ersten Wicklung, die zusammenhängend zwischen zwei Wicklungsteilen der zweiten Wicklung angeordnet sind, frei gewählt werden, wodurch eine hohe Freiheit in der Einstellung der Streuinduktivität für jeden Betriebsmodus erreicht werden kann. Insbesondere kann dadurch eine vorteilhafte Anpassung der Streuinduktivität in jedem Betriebsmodus an vorgeschriebenen Anforderungen erreicht werden, ohne dass der Transformator oder ein nachgeschalteter Verbraucher in ihrer Dimensionierung angepasst werden müssen. Die Streuinduktivitätsanforderungen können auf diese Weise kostengünstig eingehalten werden.

Die Unterteilung in die erste und zweite Wicklung kann eingangsseitig erfolgen. Jedoch wird in einer vorteilhaften Ausbildung vorgeschlagen, dass die erste und zweite Wicklung Bestandteile der ausgangsseitigen Wicklungseinheit sind.

Zu einem einfachen Umschalten zwischen den Betriebsmodi wird vorgeschlagen, dass die Spannungsumwandlungsvorrichtung eine Schalteinheit aufweist, die gemäß einer anzuwendenden Betriebskonfiguration die erste und/oder die zweite Wicklung in einen aktiven Zustand schaltet. Unter einem "aktiven" Zustand einer Wicklung soll ein Zustand verstanden werden, in welchem die Wicklung spannungsführend mit einem nachgeschalteten Verbraucher verbunden ist. Mit der Unterteilung einer der Wicklungseinheiten in zumindest zwei Wicklungen können vorteilhaft zumindest drei Betriebsmodi bereitgestellt werden.

Es wird außerdem vorgeschlagen, dass die Schalteinheit gemäß einer anzuwendenden Betriebskonfiguration die zweite Wicklung - ausgehend von einem inaktiven Zustand - zur ersten, sich in einem aktiven Zustand befindenden Wicklung zuschaltet. Insbesondere kann eine einfache Schaltungstopologie erreicht werden, wenn sich die erste Wicklung permanent in einem aktiven Zustand befindet.

Die Spannungsumwandlungsvorrichtung eignet sich insbesondere für Anwendungen, bei welchen die Ausgangsspannung kleiner als die Eingangsspannung ist.

In einer bevorzugten Ausführung der Erfindung wird vorgeschlagen, dass die Eingangsspannung eine Bahnnetzspannung ist und die Ausgangsspannung zur Versorgung eines Schienenfahrzeugsverbrauchers dient. Der Aufbau von Transformatoren im Bereich der Schienenfahrzeugskonstruktion, insbesondere der Aufbau eines sogenannten Haupttransformators, ist bekannterweise besonders platzaufwendig. Eine zum Erfüllen von Anforderungen an die Streuinduktivität notwendige Überdimensionierung führt herkömmlicherweise zu einem erheblichen zusätzlichen Platzaufwand. Mit der vorgeschlagenen Spannungsumwandlungsvorrichtung kann in dieser Hinsicht ein großer Bauraum eingespart werden, der anderweitig genutzt werden kann. Die Ausgangsspannung dient insbesondere zur Versorgung einer Schienenfahrzeugsantriebseinheit und/oder eines Bordnetzes (auch "Hilfsbetriebsversorgung" genannt), welches zur Verfügung weiterer elektrischer Verbraucher des Schienenfahrzeugs steht.

Ist der Schienenfahrzeugsverbraucher als Antriebseinheit ausgebildet, dient die Ausgangsspannung vorteilhaft zum Betreiben eines Traktionsstromrichters. Hierbei hängt die Ausgangsspannung insbesondere von einer Zwischenkreisspannung ab. Mittels der vorgeschlagenen Spannungsumwandlungsvorrichtung kann besonders vorteilhaft eine Überdimensionierung des Traktionsstromrichters aufgrund von bestimmten Anforderungen an die Streuinduktivität vermieden werden.

Es wird ein Ausführungsbeispiel der Erfindung anhand der Zeichnungen erläutert. Es zeigen:
- Figur 1:: eine elektrische Schaltung eines Schienenfahrzeugs mit einem Transformator,
- Figur 2:: eine Schnittansicht des Transformators aus Figur 1 und
- Figur 3:: eine Detailansicht einer ausgangsseitigen Wicklungseinheit des Transformators aus Figur 2.

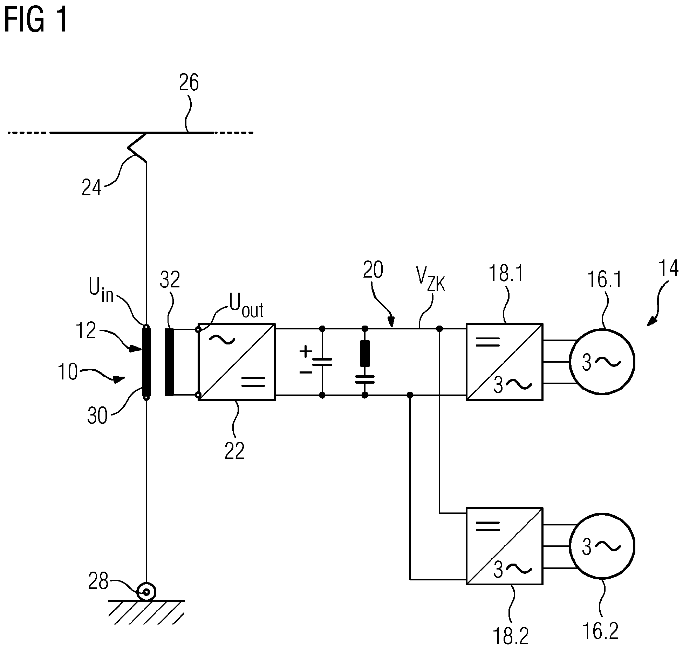

Figur 1 zeigt eine elektrische Schaltung eines Schienenfahrzeugs in einer stark schematisierten Ansicht. Diese weist insbesondere eine Spannungsumwandlungsvorrichtung 10 auf, die einen Transformator 12 umfasst. Dieser stellt im Betrieb an seinen Ausgangsklemmen eine Ausgangsspannung Uₒᵤₜ, die zur Versorgung eines elektrischen Verbrauchers des Schienenfahrzeugs vorgesehen ist. Im betrachteten Ausführungsbeispiel ist der elektrische Verbraucher als Schienenfahrzeugsantriebseinheit 14 ausgebildet, die z.B. zwei Antriebsmotoren 16.1 und 16.2 umfasst. Die Antriebsmotoren 16 werden mittels zwei Traktionsstromrichtern 18.1, 18.2 betrieben, die auf bekannte Weise die notwendige elektrische Leistung für die Antriebsmotoren 16.1, 16.2 zur Verfügung stellen. Hierzu sind die Traktionsstromrichter 18 mit einem Zwischenkreis 20 verbunden, der eine Gleichspannung V_{ZK} zur Verfügung stellt. Die Gleichspannung V_{ZK} wird ausgehend von der Ausgangsspannung Uₒᵤₜ mittels eines Gleichrichters 22 gewonnen, der den Ausgang des Transformators 12 mit dem Zwischenkreis 20 verbindet.

Der Transformator 12 stellt die Ausgangsspannung Uₒᵤₜ ausgehend von einer Eingangsspannung Uᵢₙ bereit, die im betrachteten Ausführungsbeispiel einer Bahnnetzspannung entspricht, die mittels eines Stromabnehmers 24 von einer Leitung 26 einer Bahnstrecke bezogen wird. Die Leitung 26 kann als Oberleitung oder als Stromschiene ausgebildet sein. Der Transformator 12 ist mittels einer Anbindung mit einer Achse 28 des Schienenfahrzeugs geerdet.

Der Transformator 12 hat die Funktion, die Eingangsspannung Uᵢₙ herunter zu transformieren, so dass die Ausgangsspannung Uₒᵤₜ kleiner ist als die Eingangsspannung Uᵢₙ. Er ist ferner für zumindest zwei Spannungsübersetzungsverhältnisse vorgesehen und ist hierzu gemäß zumindest zwei entsprechenden Betriebsmodi betreibbar. In der hier betrachteten Ausführung als Bestandteil einer Schaltung eines Schienenfahrzeugs unterscheiden sich die Spannungsübersetzungsverhältnisse durch den jeweiligen Wert der Eingangsspannung Uᵢₙ, wobei der Wert der Ausgangsspannung Uₒᵤₜ in beiden Betriebsmodi gleich ist bzw. von der Spannung V_{ZK} des Zwischenkreises 20 abhängt.
Dies entspricht dem Betrieb der Schienenfahrzeugsantriebseinheit 14 bei zumindest zwei unterschiedlichen Werten der Bahnnetzspannung. Typische Werte der Eingangsspannung Uᵢₙ sind 25 kV - 50 Hz und 15 kV - 16 2/3 Hz, wobei weitere Werte denkbar sind.

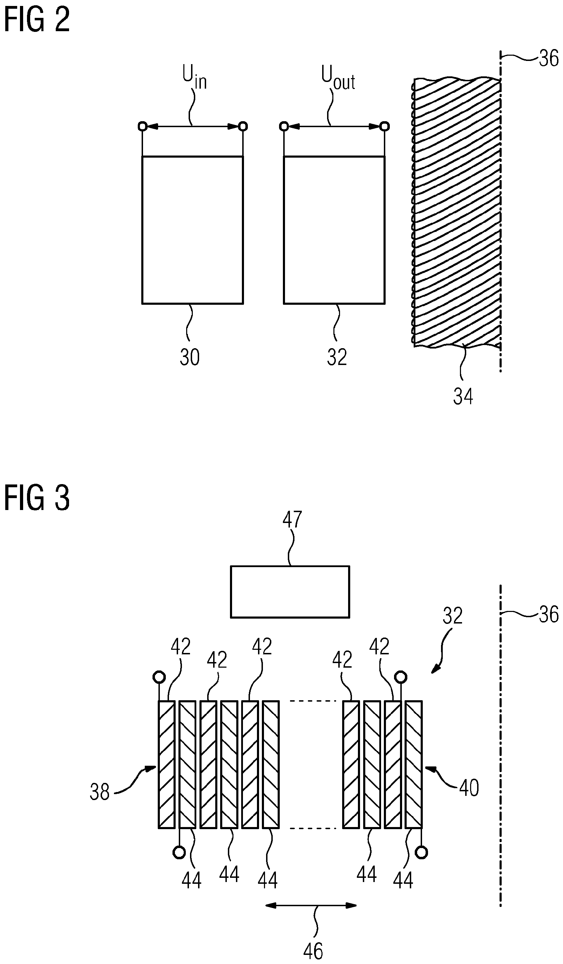

Der Betrieb des Transformators 12 wird anhand der Figur 2 näher erläutert. Diese zeigt eine schematische Schnittansicht des Transformators 12.

Der Transformator 12 weist eine eingangsseitige Wicklungseinheit 30 auf, welche die Eingangsspannung Uᵢₙ führt. Die Ausgangsspannung Uₒᵤₜ wird durch eine ausgangsseitige Wicklungseinheit 32 geführt, wobei beide Wicklungseinheiten 30, 32 um einen gemeinsamen, aus einem magnetisierbaren Material bestehenden Kern 34, wie insbesondere einen Eisenkern, gewickelt sind. In der gezeigten Ausführung weist der Transformator 12 eine Zylinderwicklung auf, wobei die Schnittebene parallel zur Zylinderlängserstreckung ausgerichtet ist und die Symmetrieachse der zylindrischen Anordnung bzw. die Zylinderachse 36 enthält. In der Figur ist lediglich eine Zylinderhälfte dargestellt.

Figur 3 zeigt die ausgangsseitige Wicklungseinheit 32 in einer Detailansicht. Die ausgangsseitige Wicklungseinheit 32 ist in zumindest zwei unterschiedlichen Wicklungen 38, 40 unterteilt. Diese sind der Klarheit halber mittels unterschiedlicher Schraffuren dargestellt. Die Anordnung der ersten Wicklung 38 und der zweiten Wicklung 40 kennzeichnet sich dadurch, dass Wicklungsteile 42 der ersten Wicklung 38 mit Wicklungsteilen 44 der zweiten Wicklung 40 eine alternierende Anordnung bilden. In radialer Richtung 46 bzw. in zur Zylinderachse 36 senkrechter Richtung betrachtet sind - mit Ausnahme der randseitigen Wicklungsteile - Wicklungsteile 42 der ersten Wicklung 38 zwischen zwei Wicklungsteilen 44 der zweiten Wicklung 40 angeordnet und umgekehrt. In einer äquivalenten Formulierung entspricht die alternierende Anordnung einer "Überkreuzverschaltung" der beiden Wicklungen 38, 40. Für die betrachtete Zylinderwicklung des Transformators 12 entsprechen die Wicklungsteile 42 bzw. 44 sogenannten Wicklungslagen der Zylinderwicklung. Der Übersichtlichkeit halber werden weitere Wicklungsteile 42 bzw. 44 durch Striche ersetzt.

In der gezeigten, beispielhaften Ausführung wechseln sich jeweils ein Wicklungsteil 42 und ein Wicklungsteil 44 ab. Die Anzahl der Wicklungsteile der einen Wicklung, die zusammenhängend zwischen Wicklungsteilen der anderen Wicklung angeordnet sind, ist jedoch frei wählbar. So können z.B. zwei oder mehr zusammenhängende Wicklungsteile 42 bzw. 44 zwischen zwei Wicklungsteilen 44 bzw. 42 angeordnet sein. Die Wicklungsteile 42, 44 können gemäß einem sich wiederholenden Muster verteilt sein und/oder die Anzahl von zusammenhängenden Wicklungsteilen einer Wicklung zwischen zwei Wicklungsteilen der anderen Wicklung kann entlang der Radialrichtung 46 variieren.

Den Betriebsmodi des Transformators 12 ist jeweils eine unterschiedliche Betriebskonfiguration der Wicklungen 38, 40 zugeordnet. Die Betriebskonfigurationen unterscheiden sich durch die Art und durch die Anzahl der im jeweiligen Betriebsmodus aktiv geschalteten Wicklungen 38, 40 der ausgangsseitigen Wicklungseinheit 32. Eine im Betriebsmodus aktive Wicklung trägt zur Bereitstellung der Ausgangsspannung Uₒᵤₜ bei bzw. sie ist mit dem nachgeschalteten elektrischen Verbraucher spannungsführend verbunden. Für die gezeigte Ausführung der ausgangsseitigen Wicklungseinheit 32 sind drei unterschiedliche Betriebskonfigurationen möglich, in welchen die erste Wicklung 38, die zweite Wicklung 40 oder eine Kombination beider Wicklungen 38 und 40 aktiv ist.

Zum Umschalten zwischen den verschiedenen Betriebskonfigurationen der Wicklungen 38, 40 weist die Spannungsumwandlungsvorrichtung 10 eine in Figur 3 schematisch dargestellte Schalteinheit 47 auf. Die Schalteinheit 47 dient dazu, abhängig vom aktuellen Betriebsmodus des Transformators 12 die erste Wicklung 38 und/oder die zweite Wicklung 40 in den aktiven Zustand zu schalten bzw. mit dem nachgeschalteten elektrischen Verbraucher spannungsführend zu verbinden.

In einer besonderen Ausführung wird der Transformator 12 abhängig vom Wert der Eingangsspannung bzw. der Bahnnetzspannung in einem ersten Betriebsmodus, in welchem lediglich eine der Wicklungen 38, 40 aktiv geschaltet wird, oder in einem zweiten Betriebsmodus betrieben, in welchem beide Wicklungen 38, 40 aktiv geschaltet werden. Beim Umschalten zwischen beiden Betriebsmodi schaltet die Schalteinheit 47 die bis dahin inaktive Wicklung zur bereits aktiven Wicklung zu.

Die Betriebsmodi unterscheiden sich zumindest in zweierlei Hinsicht voneinander. Es werden ausgangsseitig verschiedene Windungszahlen bereit gestellt, durch welche unterschiedliche Spannungsübersetzungsverhältnisse erreicht werden. Ferner unterscheiden sich die Betriebsmodi durch den mittleren Abstand zwischen der eingangsseitigen Wicklungseinheit 30 und dem aktiven Teil der ausgangsseitigen Wicklungseinheit 32. Hierdurch werden unterschiedliche Werte der Streuinduktivität bzw. der Kurzschlussspannung des Transformators 12 erreicht. In der gezeigten Ausführung ist der mittlere Abstand in Radialrichtung 46 betrachtet.

Die Ausbildung der ausgangsseitigen Wicklungseinheit 32 bzw. der alternierenden Anordnung der Wicklungsteile 42, 44 kann konstruktiv einfach an Anforderungen in Bezug auf Streuinduktivität bzw. Kurzschlussspannung, die von Bahnbetreibern in Abhängigkeit der Bahnnetzspannung gesetzt werden, angepasst sein.

## Patentansprüche

1. Spannungsumwandlungsvorrichtung mit zumindest einem Transformator (12), der ausgehend von einer Eingangsspannung (Uᵢₙ) zum Bereitstellen einer Ausgangsspannung (Uₒᵤₜ) vorgesehen ist, eine eingangsseitige Wicklungseinheit (30) und eine ausgangsseitige Wicklungseinheit (32) umfasst und gemäß zumindest zwei Betriebsmodi betreibbar ist, die jeweils einem unterschiedlichen Spannungsübersetzungsverhältnis zugeordnet sind, wobei zumindest eine der Wicklungseinheiten (30, 32) eine erste (38) und wenigstens eine zweite Wicklung (40) umfasst und den Betriebsmodi jeweils eine unterschiedliche Betriebskonfiguration der Wicklungen (38, 40) zugeordnet ist, **dadurch gekennzeichnet, dass**
die erste Wicklung (38) Wicklungsteile (42) aufweist, die mit Wicklungsteilen (44) der zweiten Wicklung (40) eine alternierende Anordnung bilden, und
sie eine Schalteinheit (47) aufweist, die gemäß einer anzuwendenden Betriebskonfiguration die zweite Wicklung (40) ausgehend von einem inaktiven Zustand zur ersten, sich in einem aktiven Zustand befindenden Wicklung (38) zuschaltet.

2. Spannungsumwandlungsvorrichtung nach Anspruch 1,
**dadurch gekennzeichnet, dass**
die erste (38) und zweite Wicklung (40) Bestandteile der ausgangsseitigen Wicklungseinheit (32) sind.

3. Spannungsumwandlungsvorrichtung nach einem der vorhergehenden Ansprüche,
**dadurch gekennzeichnet, dass**
die Wicklungsteile (42, 44) als Wicklungslagen ausgebildet sind.

4. Spannungsumwandlungsvorrichtung nach einem der vorhergehenden Ansprüche,
**dadurch gekennzeichnet, dass**
die Ausgangsspannung (Uₒᵤₜ) kleiner als die Eingangsspannung (Uᵢₙ) ist.

5. Spannungsumwandlungsvorrichtung nach einem der vorhergehenden Ansprüche,
**dadurch gekennzeichnet, dass**
die Eingangsspannung (Uᵢₙ) eine Bahnnetzspannung ist und die Ausgangsspannung (Uₒᵤₜ) zur Versorgung eines Schienenfahrzeugsverbrauchers dient.

6. Spannungsumwandlungsvorrichtung nach Anspruch 5,
**dadurch gekennzeichnet, dass**
die Ausgangsspannung (Uₒᵤₜ) zum Betreiben eines Traktionsstromrichters (18.1, 18.2) dient.

7. Schienenfahrzeug mit einer Spannungsumwandlungsvorrichtung (10) nach einem der vorhergehenden Ansprüche.

## Claims

1. Voltage converting apparatus with at least one transformer (12), which is provided to supply an output voltage (Uₒᵤₜ) based on an input voltage (Uᵢₙ), comprises an input-side winding unit (30) and an output-side winding unit (32) and can be operated in accordance with at least two operating modes, which are assigned to a different voltage transformation ratio in each case, wherein at least one of the winding units (30, 32) comprises a first (38) and at least one second winding (40) and each of the operating modes is assigned a different operating configuration of the windings (38, 40),
**characterised in that**
the first winding (38) has winding parts (42) which together with winding parts (44) of the second winding (40) form an alternating arrangement, and
it has a switching unit (47) which in accordance with an operating configuration to be applied connects the second winding (40) starting from an inactive state to the first winding (38) in an active state.

2. Voltage converting apparatus according to claim 1,
**characterised in that**
the first (38) and second winding (40) are components of the output-side winding unit (32).

3. Voltage converting apparatus according to one of the preceding claims,
**characterised in that**
the winding parts (42, 44) are embodied as winding layers.

4. Voltage converting apparatus according to one of the preceding claims,
**characterised in that**
the output voltage (Uₒᵤₜ) is smaller than the input voltage (Uᵢₙ).

5. Voltage converting apparatus according to one of the preceding claims,
**characterised in that**
the input voltage (Uᵢₙ) is a railway network voltage and the output voltage (Uₒᵤₜ) serves to supply a rail vehicle consumer.

6. Voltage converting apparatus according to claim 5,
**characterised in that**
the output voltage (Uₒᵤₜ) serves to operate a traction current converter (18.1, 18.2).

7. Rail vehicle with a voltage converting apparatus (10) according to one of the preceding claims.

## Revendications

1. Dispositif de conversion de tension, comprenant au moins un transformateur (12), qui est prévu pour mettre à disposition une tension (Uₒᵤₜ) de sortie à partir d'une tension (Uᵢₙ) d'entrée, comprend une unité (30) d'enroulement du côté de l'entrée et une unité (32) d'enroulement du côté de la sortie et peut fonctionner suivant au moins deux modes de fonctionnement, qui sont associés respectivement à un rapport de multiplication de tension différent, dans lequel au moins l'une des unités (30, 32) d'enroulement comprend un premier (38) et un deuxième enroulements (40) et au mode de fonctionnement est associée respectivement une configuration de fonctionnement différente des enroulements (38, 40),
**caractérisé en ce que**
le premier enroulement (38) a des parties (42) d'enroulement, qui forment, avec des parties (44) d'enroulement du deuxième enroulement (40), un agencement en alternance et
il a une unité (47) de commutation, qui, suivant une configuration de fonctionnement à utiliser, connecte le deuxième enroulement (40), à partir d'un état inactif, au premier enroulement (38) se trouvant dans un état actif.

2. Dispositif de conversion de tension suivant la revendication 1,
**caractérisé en ce que**
le premier (38) et le deuxième enroulements (40) font partie de l'unité (32) d'enroulement du côté de la sortie.

3. Dispositif de conversion de tension suivant l'une des revendications précédentes,
**caractérisé en ce que**
les parties (42, 44) d'enroulement sont constituées sous la forme de couches d'enroulement.

4. Dispositif de conversion de tension suivant l'une des revendications précédentes,
**caractérisé en ce que**
la tension (Uₒᵤₜ) de sortie est plus basse que la tension (Uᵢₙ) d'entrée.

5. Dispositif de conversion de tension suivant l'une des revendications précédentes,
**caractérisé en ce que**
la tension (Uᵢₙ) d'entrée est une tension de réseau de voie et la tension (Uₒᵤₜ) de sortie sert à alimenter un consommateur de véhicule ferroviaire.

6. Dispositif de conversion de tension suivant la revendication 5,
**caractérisé en ce que**
la tension (Uₒᵤₜ) de sortie sert à faire fonctionner un convertisseur (18.1, 18.2) de traction.

7. Véhicule ferroviaire ayant un dispositif (10) de conversion de tension suivant l'une des revendications précédentes.
